# EUROPÄISCHE PATENTSCHRIFT

(11) **EP 3 049 270 B1**
(45) Veröffentlichungstag und Bekanntmachung des Hinweises auf die Patenterteilung: **06.11.2019**
(21) Anmeldenummer: 14771776.3
(22) Anmeldetag: 09.09.2014
(51) Int. Cl.: B60K 6/46, B60W 10/06, B60W 10/08, B60W 10/184, B60W 10/30, B60W 20/00, B60W 30/18

(54) **SELBSTFAHRENDE ARBEITSMASCHINE SOWIE VERFAHREN ZUM ABBREMSEN EINER SOLCHEN ARBEITSMASCHINE**
SELF-PROPELLED WORKING MACHINE AND METHOD FOR BRAKING A WORKING MACHINE OF THIS TYPE
ENGIN DE TRAVAIL AUTOMOTEUR ET PROCÉDÉ DE FREINAGE D'UN TEL ENGIN DE TRAVAIL

(30) Priorität: 27.09.2013 DE 102013016126; 11.10.2013 DE 102013016915; 19.12.2013 DE 102013021608
(43) Veröffentlichungstag der Anmeldung: 03.08.2016
(73) Patentinhaber: Liebherr-Components Biberach GmbH, 88400 Biberach an der Riß (DE)
(72) Erfinder: HOFFMANN, Sebastien, Nicolas, F-68000 Colmar (FR); RICHTHAMMER, Burkhard, Emanuel, 79102 Freiburg (DE); SOMMER, Bernd, 88400 Biberach (DE); DUELLI. Stefan, 88426 Eberhardzell (DE); MERKLE, Markus, 89597 Munderkingen (DE); RESCH, Jürgen, 88456 Ingoldingen-Degernau (DE)
(74) Vertreter: Thoma, Michael
(86) Internationale Anmeldenummer: PCT/EP2014/002437
(87) Internationale Veröffentlichungsnummer: WO 2015/043715

(56) Entgegenhaltungen:
- WO-A1-2012/099255
- AT-U2- 12 010
- DE-A1-102011 089 102
- US-A1- 2005 137 060

## Beschreibung

Die vorliegende Erfindung betrifft eine selbstfahrende Arbeitsmaschine, vorzugsweise in Form eines Muldenkippers oder Trucks, mit einem Elektroantrieb umfassend zumindest einen Elektromotor, einen von einem Verbrennungsmotor antreibbaren Generator zum Stromversorgen des Elektroantriebs, sowie einer Bremsvorrichtung zum Abbremsen der Arbeitsmaschine, wobei die genannte Bremsvorrichtung ein generatorisches Bremsen durch den Elektroantrieb vorsieht und eine Rückspeisevorrichtung zum Rückspeisen von elektrischer Motorbremsleistung des Elektromotors an den Generator umfasst, um die Motorbremsleistung auf dem Verbrennungsmotor abzustützen. Die Erfindung betrifft ferner auch ein Verfahren zum Abbremsen einer solchen Arbeitsmaschine.

Bei selbstfahrenden Arbeitsmaschinen wie Muldenkippern, Trucks, oder anderen selbstfahrenden Offroad-Fahrzeugen für Baustellen, Minen und dergleichen werden in jüngerer Zeit Elektroantriebe mit zumindest einem Elektromotor verwendet, um die gegenüber hydrostatischen Antrieben typischen Vorteile solcher Elektroantriebe wie bspw. deren besseren Wirkungsgrad und eine leichtere Wartung zu nutzen. Durch den beträchtlich besseren Wirkungsgrad können bei den teilweise beachtlichen Leistungen auch deutlich niedrigere Betriebskosten erreicht werden. Der Elektroantrieb kann dabei insbesondere als Fahrantrieb genutzt werden, mittels dessen zumindest ein Rad oder ein Kettenantrieb des Fahrwerks angetrieben wird, aber auch zum Antreiben eines Hauptarbeitsaggregats wie bspw. der Fräswalze eines Surface-Miners eingesetzt werden.

Zur Stromversorgung des Elektroantriebs kann dabei ein Generator vorgesehen sein, der von einem Verbrennungsmotor bspw. in Form eines Dieselmotors, eines Benzinmotors oder eines Gasmotors antreibbar ist, wobei von dem Verbrennungsmotor nicht nur der Stromgenerator, sondern auch ein Hydraulikaggregat, insbesondere dessen Pumpe angetrieben werden kann, um andere Stellaktoren von Hydraulikkomponenten hydraulisch antreiben zu können. Bei einer Planierraupe kann bspw. die Verstell- und/oder Hubvorrichtung für die Planierschaufel mittels solcher hydraulischer Aktoren angetrieben werden. Bei Muldenkippern kann die Kippmulde mittels eines Hydraulikaktors aufgewippt werden.

Eine Planierraupe mit einem solchen Antriebskonzept umfassend einen Elektroantrieb ist beispielsweise aus der Schrift US 7,950,481 bekannt, wobei hier vorgeschlagen wird, einen Elektromotor zentral anzuordnen und dessen Antriebsleistung über ein Differenzial auf verschiedene anzutreibende Elemente zu geben. Dabei wird vorgeschlagen, überschüssige elektrische Energie, die vom Generator bei nicht ausgelastetem Verbrennungsmotor erzeugt wird, in eine Batterie zu speichern, um aus der Batterie im Sinne einer Boost-Funktion zusätzliche elektrische Energie auf den Elektromotor geben zu können, wenn dieser eine besonders hohe Leistung benötigt, was beispielsweise beim Anfahren der Maschine der Fall sein kann. Ist umgekehrt die Arbeitsmaschine abzubremsen, werden mechanische Bremsen in Form von federvorgespannten, hydraulisch lüftbaren Scheibenbremsen betätigt. Je nach Größe der Arbeitsmaschine und Einsatzzweck müssen solche Bremsen mehr oder minder groß dimensioniert werden, um bei intensiven Bremsvorgängen über längere Zeit nicht zu überhitzen bzw. zu überlasten, wie dies bspw. bei ständig vor- und zurückfahrenden Planierraupen oder bei vollbeladenen, talwärts fahrenden Muldenkippern der Fall sein kann.

Ferner beschreibt die Schrift US 8,395,335 B2 ein elektrisches Antriebssystem für Offroad-Trucks, bei dem die elektrische Antriebsenergie von einem Verbrennungsmotor bereitgestellt wird, der einen Generator antreibt. Im Bremsbetrieb wird von den Elektromotoren bereitgestellte, elektrische Motorbremsleistung auf den Generator gegeben, um den Kraftstoffverbrauch des Verbrennungsmotors zu reduzieren. Überschüssige elektrische Motorbremsleistung wird darüber hinaus am Verbrennungsmotor vorbei auf elektrische Hilfsaggregate gegeben, um diese Hilfsaggregate elektrisch anzutreiben, und schließlich über elektrische Bremswiderstände in Form einer sog. Grid Box dissipativ abgebaut bzw. "verbrannt", d.h. in Wärme umgewandelt. Die Verteilung der elektrischen Motorbremsleistung erfordert jedoch ein relativ kompliziertes Steuerungssystem unter Berücksichtigung der an den Hilfsaggregaten verwendbaren elektrischen Energie. Zudem muss die an der genannten Grid Box entstehende Wärmebelastung berücksichtigt werden.

Aus der Schrift US 2005/0137060 A1 ist es ferner bekannt, die Motorbremsleistung eines elektrischen Fahrantriebs vorrangig an einen Generator rückzuspeisen und damit auf dem mit dem Generator verbundenen Verbrennungsmotor abzustützen. Bei Erreichen einer vorbestimmten Drehzahl des Verbrennungsmotors wird eine dann immer noch überschießende Motorbremsleistung des Elektromotors zunächst in einen Speicher abgezweigt und/oder zum Antreiben elektrischer Hilfsaggregate abgezweigt, und sodann in einer weiteren Stufe über Bremswiderstände dissipativ abgebaut. Die Rückspeisevorrichtung ist hierzu mehrsträngig mit Verzweigungen zum Energiespeicher und zu elektrischen Hilfsaggregaten ausgebildet und mit Bremswiderständen versehen.

Aus der EP 26 66 692 A1 ist eine -umgekehrte Bremsstrategie bekannt, bei der Motorbremsleistung eines als Fahrantrieb dienenden Elektromotors vorrangig zum Laden eines Energiespeichers verwendet wird und erst dann, wenn die Motorbremsleistung die Ladekapazität übersteigt, zum Hochdrehen eines Verbrennungsmotors verwendet wird, wobei vor Erreichen einer Maximaldrehzahl des Verbrennungsmotors auch noch eine Hydraulikpumpe auf einen höheren hydraulischen Widerstand gefahren wird.

Der vorliegenden Erfindung liegt die Aufgabe zugrunde, eine verbesserte Arbeitsmaschine der eingangs genannten Art sowie ein verbessertes Verfahren zum Abbremsen einer solchen Arbeitsmaschine zu schaffen, die Nachteile des Standes der Technik vermeiden und Letzteren in vorteilhafter Weise weiterbilden. Vorzugsweise soll mit einer einfach aufgebauten, leicht zu steuernden Bremsvorrichtung ein energieeffizientes Abbremsen mit ausreichenden Verzögerungen ermöglicht werden.

Die genannte Aufgabe wird durch eine Arbeitsmaschine gemäß Anspruch 1 sowie ein Verfahren zum Abbremsen einer solchen Arbeitsmaschine gemäß Anspruch 10 gelöst. Bevorzugte Ausgestaltungen der Erfindung sind Gegenstand der abhängigen Ansprüche.

Es wird also vorgeschlagen, die gewünschte Bremswirkung vorrangig durch generatorisches Bremsen über den/die Elektromotor/en zu erzielen und die hierbei erzeugte elektrische Motorbremsleistung auf dem Verbrennungsmotor abzustützen und dabei eine Überlastung des Verbrennungsmotors durch übermäßige rückgespeiste Motorbremsleistung durch Zuschalten einer mechanischen Bremse abzufangen bzw. zu verhindern. Erfindungsgemäß ist eine Bremssteuervorrichtung zum automatischen Zuschalten einer mechanischen Bremse in Abhängigkeit der auf den Verbrennungsmotor rückgespeisten Motorbremsleistung und/oder des Betriebszustands des mit rückgespeister Motorbremsleistung beaufschlagten Verbrennungsmotors vorgesehen. Vorteilhafterweise wird im Schubbetrieb die Bremsenergie bzw. die von dem zumindest einen Elektromotor bereitgestellte elektrische Motorbremsleistung vorrangig über den Generator, der die elektrische Motorbremsleistung in mechanische Antriebsleistung für den Verbrennungsmotor umwandelt, auf den Verbrennungsmotor zurückgespeist und dort zum Antreiben der mit dem Verbrennungsmotor verbundenen Nebenverbraucher wie Lüfter, Kühler oder Pumpen sowie zum Überwinden der Schleppwiderstände des Verbrennungsmotors verwendet. Übersteigt die auf dem Verbrennungsmotor abgestützte Motorbremsleistung ein für den Verbrennungsmotor verträgliches Maß und/oder erreicht der Verbrennungsmotor unter Einwirkung der rückgespeisten Motorbremsleistung einen vorbestimmten Betriebszustand, wird automatisch die mechanische Bremse zugeschaltet, um eine weitere Erhöhung der auf dem Verbrennungsmotor abgestützten, elektrischen Motorbremsleistung zu vermeiden bzw. zu verringern. Das Zuschalten der mechanischen Bremse kann dabei vorteilhafterweise sanft mit - soweit erforderlich - sukzessive zunehmender Bremskraft erfolgen, so dass der Übergang von einem Bremsen ohne mechanische Bremse zu einem Bremsen mit mechanischer Bremse und umgekehrt nach Art eines Blending-Vorgangs in weich übergehender Weise ohne Verzögerungsstoß erfolgt. Die Bremskraft der mechanischen Bremse kann unter Berücksichtigung der bereits auf dem Verbrennungsmotor abgestützten Bremsleistung sanft variiert und gesteuert, insbesondere geregelt werden, um einem vom Fahrer vorgebbaren Bremskraftwunsch möglichst nahe zu kommen.

Dabei wird mit der mechanischen Bremse nachrangig erst dann gebremst, wenn die auf den Verbrennungsmotor rückgespeiste Motorbremsleistung die Verzögerungskapazität des Verbrennungsmotors und daran angebundener Hilfsaggregate erreicht.

Insbesondere kann bei zunehmender gewünschter oder benötigter Bremsleistung - beispielsweise durch zunehmendes Betätigen eines Bremsgebers und/oder zunehmendes Gefälle - zunächst eine steigende elektrische Motorbremsleistung, die von dem zumindest einen Elektromotor erzeugt wird, auf dem Verbrennungsmotor abgestützt werden, wobei sukzessive die Kraftstoffzufuhr an den Verbrennungsmotor reduziert wird, bis der Verbrennungsmotor bei konstanter Drehzahl keinen Kraftstoff mehr verbraucht. Vorteilhafterweise kann bei weiter zunehmender rückgespeister elektrischer Motorbremsleistung der Verbrennungsmotor über eine an sich gewünschte konstante Motordrehzahl hinaus hochgedreht werden, bis eine maximal zulässige oder gewünschte Motordrehzahl des Verbrennungsmotors erreicht wird, wobei vorteilhafterweise das genannte Hochdrehen des Verbrennungsmotors unter abgesperrter Kraftstoffzufuhr erfolgt. Wird die genannte maximale Drehzahl des Verbrennungsmotors erreicht, schaltet die vorgenannte Bremssteuervorrichtung die mechanischen Bremsen zu, um noch weiter ansteigende rückgespeiste Motorbremsleistung abzufangen und hierdurch ein weiteres Ansteigen der auf den Verbrennungsmotor gegebenen rückgespeisten Motorbremsleistung zu verhindern bzw. zumindest einzudämmen.

Die Bremssteuervorrichtung sieht also vorteilhafterweise mehrere, nacheinander zuschaltbare Bremsstufen vor, um die gewünschte oder benötigte Bremsleistung abzufangen. Zunächst bzw. vorrangig wird elektromotorische Motorbremsleistung auf dem Verbrennungsmotor abgestützt, ohne mechanische Bremsen zuzuschalten, um einerseits den Verbrennungsmotor energieeffizient betreiben zu können und andererseits eine unnötige Wärmebelastung oder Verschleiß der mechanischen Bremsen zu vermeiden. Erst bei Erreichen einer Verzögerungskapazität des Verbrennungsmotors und der daran angebundenen Hilfsaggregate bzw. Erreichen der Verträglichkeitsgrenze der Abstützung der elektrischen Motorbremsleistung auf dem Verbrennungsmotor werden die mechanischen Bremsen in einer weiteren Stufe zugeschaltet. Innerhalb der vorgenannten ersten Bremsstufe, in der die elektrische Motorbremsleistung ausschließlich bzw. zumindest vorwiegend auf dem Verbrennungsmotor abgestützt wird, wird dabei zunächst in einer ersten Unterstufe die Kraftstoffzufuhr bei im Wesentlichen konstanter Verbrennungsmotordrehzahl solange reduziert, bis die Kraftstoffzufuhr komplett abgeschaltet ist. Ist die Kraftstoffzufuhr abgesperrt, wird in einer zweiten Unterstufe ein Hochdrehen des Verbrennungsmotors zugelassen.

Vorteilhafterweise kann die Bremssteuervorrichtung die auf dem Verbrennungsmotor abstützbare Bremsleistung durch Verändern der Leistungsaufnahme zumindest eines Hilfsaggregats steuern, das an den Verbrennungsmotor angebunden ist, beispielsweise in Form eines Lüfters, einer Kühlvorrichtung oder einer Pumpe. Insbesondere kann die Bremssteuervorrichtung die Leistungsaufnahme zumindest eines solchen Hilfsaggregats erhöhen, bevor die mechanische Bremse verwendet wird. Hierdurch kann nicht nur die generatorische Motorbremsleistung und damit auch die gesamte Bremsleistung vergrößert und variabler gesteuert werden und der Verschleiß der mechanischen Bremse hinausgezögert werden, sondern es kann vor allen Dingen auch ein nochmals effizienterer Betrieb der Arbeitsmaschine erreicht werden, beispielsweise dadurch, dass ein Lüfter oder eine Kühlvorrichtung bei Bergabfahrt über das an sich notwendig Maß hinaus leistungsmäßig hochgefahren wird, um entsprechende Aggregate stärker als zwingend erforderlich herabzukühlen, so dass dann bei nachfolgender Bergfahrt oder auch auf ebener Strecke das Hilfsaggregat länger ausgeschaltet oder bei niedrigerer Leistung als sonst betrieben werden kann. In Weiterbildung der Erfindung ist es jedoch ebenfalls möglich, zur Erhöhung der generatorischen Motorbremsleistung ein Hilfsaggregat wie beispielsweise eine Pumpe dissipativ bei höherer Leistungsaufnahme zu betreiben, beispielsweise durch Erhöhen der Förderleistung der Pumpe beispielsweise durch Zuschalten eines Strömungswiderstands.

Die genannte Bremssteuervorrichtung ist gemäß der Erfindung derart ausgebildet, dass die mechanischen Bremsen solange unbetätigt bzw. gelöst verbleiben, solange die gewünschte oder benötigte Bremsleistung über elektromotorisches Bremsen und Rückspeisen der Motorbremsleistung auf dem Verbrennungsmotor und daran angebundener Hilfsaggregate abgestützt werden kann und solange die rückgespeiste Motorbremsleistung einen vorbestimmten Grenzwert nicht überschreitet und/oder der mit der rückgespeisten Motorbremsleistung beaufschlagte Verbrennungsmotor einen vorbestimmten Betriebszustand bzw. Betriebszustandsbereich nicht verlässt, insbesondere eine vorbestimmte Motordrehzahl nicht überschreitet.

Gemäß der Erfindung kann die Rückspeisevorrichtung ohne elektrische Bremswiderstände auskommen und frei von sog. Grid Boxen ausgebildet sein. Hierdurch kann die Rückspeisevorrichtung insgesamt einfach ausgebildet und gesteuert werden und es müssen keine thermischen Belastungsgrenzen an den elektrischen Bremswiderständen berücksichtigt werden. Auch können die sich bei starkem Niederschlag ergebenden Probleme von insbesondere luftgekühlten Bremswiderständen vermieden werden, wodurch die Arbeitsmaschine sicherer wird und überdies auch leichter bauen kann. Bei luftgekühlten Bremswiderständen besteht bekanntlich die Gefahr von Erdschlüssen durch eindringenden Feuchtigkeit, was durch eine bremswiderstandsfreie Ausbildung der Rückspeisevorrichtung vermieden werden kann.

Um auch bei starkem Bremsen keine zu hohe Rückspeiseleistung entstehen zu lassen und den nicht am Verbrennungsmotor abstützbaren Anteil der Motorbremsleistung sicher abfangen zu können, kann die zuschaltbare mechanische Bremse in vorteilhafter Weiterbildung der Erfindung als Nassbremse ausgebildet sein, die eine ausreichend hohe Abbremsleistung bereitstellen kann, ohne thermisch zu überhitzen. Insbesondere kann eine mechanische Lamellenbremse mit Ölkühlung vorgesehen sein, die indirekt oder direkt mit dem abzubremsenden Antriebselement, beispielsweise einem Rad des Fahrwerks oder einem Kettenantriebsritzel verbunden sein kann. In Weiterbildung der Erfindung können mehrere solcher mechanischer Bremsen mit mehreren der Antriebselemente verbunden sein, beispielsweise können an jedem Rad eines Trucks entsprechende Nassbremsen vorgesehen sein.

Gemäss der Erfindung wird die von dem Elektromotor oder den Elektromotoren insgesamt erzeugte elektrische Motorbremsleistung im Wesentlichen vollständig auf den mit dem Verbrennungsmotor verbundenen Generator gegeben und die dabei von dem Generator erzeugte mechanische Antriebsleistung vollständig auf den Verbrennungsmotor gegeben. Die Rückspeisevorrichtung ist einsträngig ausgebildet und besitzt keine Verzweigungen oder Abzweigungen, die verschiedene Anteile der rückgespeisten Motorbremsleistung auf verschiedene Antriebselemente geben würden. Grundsätzlich wäre es zwar ebenfalls möglich, einen Teil der rückgespeisten Motorbremsleistung abzuzweigen, beispielsweise direkt in Form elektrischer Energie auf elektrische Nebenaggregate zu geben oder mit der Antriebsleistung des Generators nicht nur den Verbrennungsmotor, sondern noch andere, mit dem Generator gekoppelte Antriebselemente wie beispielsweise einen Nebengenerator anzutreiben. Bei der vorgenannten einsträngigen Ausbildung der Rückspeisevorrichtung und der im Wesentlichen vollständigen Umsetzung der rückgespeisten Motorbremsleistung in mechanische Antriebsleistung für den Verbrennungsmotor brauchen jedoch keine verschiedenen System überwacht werden, sondern die mechanische Bremse kann im Wesentlichen nur in Abhängigkeit des Betriebszustands des Verbrennungsmotors zugeschaltet werden. Insbesondere kann die Bremssteuervorrichtung die mechanische Bremse in Abhängigkeit der Motordrehzahl des Verbrennungsmotors zuschalten, und zwar insbesondere erst dann, wenn die Drehzahl des Verbrennungsmotors eine vorbestimmte maximale Drehzahl erreicht. Die genannte Bremssteuervorrichtung kann hierzu mit Drehzahlerfassungsmitteln verbunden sein, die die genannte Drehzahl des Verbrennungsmotors bereitstellen.

Ferner kann die genannte Bremssteuervorrichtung Motorsteuermittel zum Reduzieren der Kraftstoffzufuhr an den Verbrennungsmotor umfassen, die zunächst die Kraftstoffzufuhr bei konstanter Drehzahl des Verbrennungsmotors reduzieren, insbesondere in zunehmendem Maße reduzieren derart, dass bei zunehmender Abstützung von elektrischer Motorbremsleistung auf dem Verbrennungsmotor die Kraftstoffzufuhr sukzessive gegen Null gefahren wird und dabei die Motordrehzahl konstant und/oder zumindest auf einer vorbestimmten minimalen Drehzahl, beispielsweise der Leerlaufdrehzahl gehalten wird.

Die Bremssteuervorrichtung kann dabei vorteilhafterweise Bremskraftsteuermittel umfassen, die die von der mechanischen Bremse erzeugte Bremskraft bei Erreichen der maximalen Verbrennungsmotordrehzahl nachsteuert bzw. nachjustiert, insbesondere derart, dass bei weiter zunehmendem Bremsleistungsbedarf - beispielsweise durch weiter zunehmende Betätigung des Bremsgebers - die Bremskraft der mechanischen Bremse weiter erhöht und bei wieder nachlassendem Bremsleistungsbedarf die Bremskraft der mechanischen Bremse reduziert wird, vorzugsweise aber nur soweit, dass der Verbrennungsmotor immer noch auf seiner vorbestimmten, maximalen Drehzahl gehalten wird. Vorzugsweise wird die Bremskraft der mechanischen Bremse derart geregelt, dass die maximal mögliche elektrische Motorbremsleistung auf dem Verbrennungsmotor und den ggf. angebundenen Hilfsaggregaten abgestützt wird.

Die vorliegende Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer Arbeitsmaschine in Form eines Trucks, der als Muldenkipper ausgebildet sein kann, und
- Fig. 2:: eine schematische Darstellung des Bremsenergieflusses beim Abbremsen der Arbeitsmaschine.

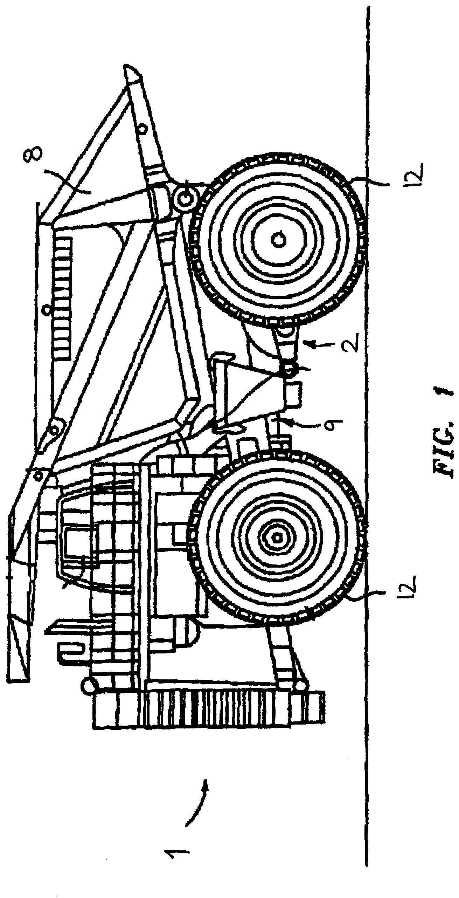

Wie Fig. 1 zeigt, kann die selbstfahrende Arbeitsmaschine 1 beispielsweise als Offroad-Truck, insbesondere in Form eines Muldenkippers, ausgebildet sein und als Fahrwerk 2 mehrere Räder 12 umfassen, die auf mehrere Achsen verteilt sind und das Chassis bzw. den Rahmen der Arbeitsmaschine 1 tragen. Es versteht sich jedoch, dass die Arbeitsmaschine grundsätzlich auch in anderer Form ausgebildet sein kann, beispielsweise in Form einer anderen Bau- oder Abbaumaschine mit einem Rad- oder Kettenfahrwerk.

Die Antriebssysteme der Arbeitsmaschine 1 umfassen zumindest einen Elektroantrieb 3 mit zumindest einem Elektromotor 4, der als Fahrantrieb dienen und die Räder 12 antreiben kann. Dabei kann ein Elektromotor 4 mehrere Räder 12 gleichzeitig antreiben, beispielsweise die Räder 12 einer Achse, ggf. über ein Verzweigungsgetriebe oder ein Differential. Alternativ kann auch ein Einzelradantrieb vorgesehen sein, bei dem jedem angetriebenen Rad 12 ein eigener Elektromotor 4 zugeordnet ist.

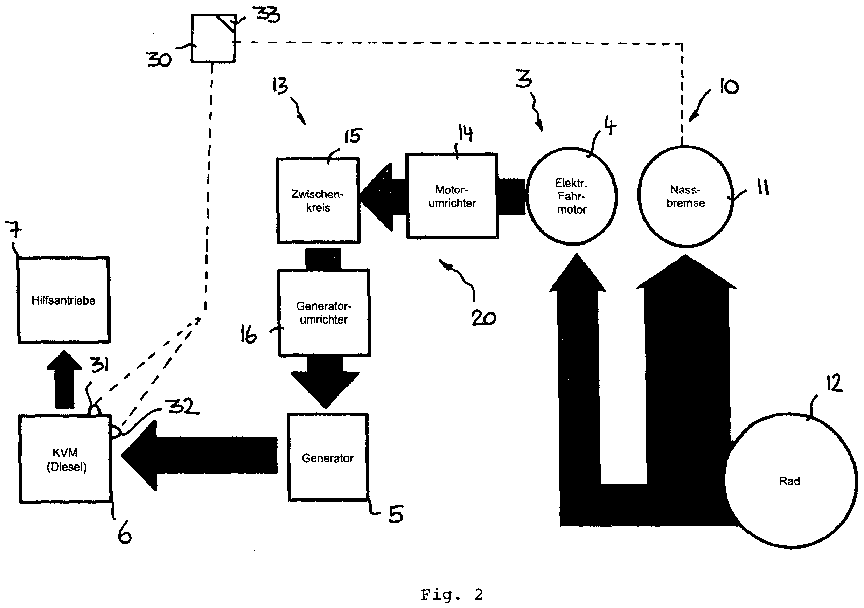

Wie Fig. 2 zeigt, wird der Elektroantrieb 3 von einem Generator 5 her mit elektrischem Strom versorgt, wobei der genannte Generator 5 von einem Verbrennungsmotor 6 her angetrieben wird, der beispielsweise als Dieselmotor oder als Benzinmotor oder auch als Gasmotor ausgebildet sein kann. Der zumindest eine Elektromotor 4 bzw. die ggf. mehreren Elektromotoren 4 ist/sind dabei über eine Leistungselektronik 13 an den Generator 5 angebunden, die einen dem jeweiligen Elektromotor 4 zugeordneten Motorumrichter 14 und einen dem Generator 5 zugeordneten Generatorumrichter 16 umfassen kann, wobei ein Zwischenkreis 15, insbesondere in Form eines Gleichspannungszwischenkreises, zwischen dem Motorumrichter 14 und dem Generatorumrichter 16 vorgesehen sein kann, vgl. Fig. 2. Der Generatorumrichter 16, der Zwischenkreis 15 und der Motorumrichter 14 sind hierbei vorteilhafterweise bidirektional arbeitend ausgebildet, um im Antriebsmodus, in dem der Generator 5 vom Verbrennungsmotor 6 angetrieben wird, den vom Generator 5 produzierten Strom auf den Elektromotor 4 geben zu können und im Bremsbetrieb vom Elektromotor 4 produzierten Strom in umgekehrter Richtung auf den Generator 5 rückspeisen zu können, wie noch erläutert wird.

Weiterhin kann die Arbeitsmaschine 1 zumindest einen Hilfsantrieb 7 umfassen, der ebenfalls von dem genannten Verbrennungsmotor 6 angetrieben werden kann. Bei dem genannten Hilfsantrieb 7 kann es sich beispielsweise um ein Hydraulikaggregat bzw. einen Hydraulikantrieb handeln, der eine von dem genannten Verbrennungsmotor 6 angetriebene Hydraulikpumpe umfassen kann, um entsprechende Hilfsaggregate hydraulisch antreiben zu können. Beispielsweise kann ein Hilfsantrieb 7 zum Verstellen der Lademulde 8 des in Fig. 1 dargestellten Muldenkippers dienen und hierzu zumindest einen Stellaktor 9 umfassen, beispielsweise in Form eines Hydraulikaktors wie Hydraulikzylinder, um die Lademulde 8 zum Entladen aufkippen zu können.

Die genannten Hilfsantriebe 7 können jedoch auch noch weitere Hilfsaggregate wie beispielsweise Kühlaggregate, Lüfter, Lenkunterstützungssystem und dergleichen umfassen.

Eine Bremsvorrichtung 10 zum Abbremsen der Arbeitsmaschine 1 umfasst einerseits eine mechanische Bremse 11, die ein einzelnes Rad oder ggf. eine Achse abbremsen kann, wobei vorteilhafterweise jedem der Räder 12 eine solche mechanische Bremse 11 zugeordnet ist. Die genannte mechanische Bremse 11 ist in Weiterbildung der Erfindung vorteilhafterweise als Nassbremse ausgebildet, beispielsweise in Form einer ölgekühlten Lamellenbremse, wobei die genannte Bremse beispielsweise federvorgespannt und elektromagnetisch lüftbar ausgebildet, jedoch auch beispielsweise in anderer Weise durch Hydraulikdruck betätigbar sein kann.

Ferner umfasst die genannte Bremsvorrichtung 10 den Einsatz des vorgenannten, zumindest einen Elektromotors 4 als Generator, um die gewünschte Bremsleistung zunächst im Wege generatorischen Bremsens durch den Elektroantrieb 3 bereitzustellen. Die hierbei von dem/den Elektromotor/en 4 bereitgestellte elektrische Motorbremsleistung wird durch eine Rückspeisevorrichtung 20 auf den mit dem Verbrennungsmotor 6 verbundenen Generator 5 gegeben, um den Generator 5 als Motor zu betreiben und den Verbrennungsmotor 6 zumindest unterstützend anzutreiben. Die genannte Rückspeisevorrichtung 20 umfasst hierbei den zuvor schon genannten Motorumrichter 14, der dem jeweiligen Elektromotor 4 zugeordnet ist, sodann den damit verbundenen Zwischenkreis 15 und den Generatorumrichter 16, über den der mit dem Verbrennungsmotor 6 verbundene Generator im Rückspeisebetrieb angesteuert werden kann.

Wie Fig. 2 zeigt, ist die genannte Rückspeisevorrichtung 20 einsträngig ausgebildet und gibt die von den Elektromotoren 4 erzeugte Motorbremsleistung im Wesentlichen vollständig auf den Generator 5, wobei die von dem Generator 5 dabei erzeugte mechanische Antriebsleistung im Wesentlichen vollständig auf den Verbrennungsmotor 6 gegeben werden kann.

Ein Bremsvorgang wird dabei mittels einer Bremssteuervorrichtung 30 gesteuert, die insbesondere das Zuschalten der mechanischen Bremse 11 und ggf. auch die Leistungsaufnahme zumindest eines der Hilfsaggregate 7 in Abhängigkeit der rückgespeisten, elektrischen Motorbremsleistung und/oder des Betriebszustands des mit der rückgespeisten Motorbremsleistung beaufschlagten Verbrennungsmotors 6 steuert bzw. regelt. Die genannte Bremssteuervorrichtung 30 kann hierzu mit Erfassungsmitteln zum Erfassen des Betriebszustands des Verbrennungsmotors 6 verbunden sein, beispielsweise mit Drehzahlerfassungsmitteln 31 und ggf. Temperaturerfassungsmitteln, um eine Überhitzung im Schubbetrieb vermeiden zu können. Andere Erfassungsmittel zum Überwachen anderer Betriebsparameter, beispielsweise auch des Betriebszustands der Hilfsaggregate können ebenfalls vorgesehen sein, um bei Erreichen von hier kritischen Grenzen ebenfalls die mechanischen Bremsen zuschalten zu können. Ferner kann die genannte Bremssteuervorrichtung 30 auch mit Erfassungsmitteln zur Erfassung der rückgespeisten Motorbremsleistung verbunden sein, um ggf. auch eine maximale Rückspeiseleistung bei der Zuschaltung der mechanischen Bremse 11 berücksichtigen zu können. Die rückgespeiste elektrische Motorbremsleistung kann hierbei grundsätzlich in verschiedener Art und Weise erfasst werden, beispielsweise durch direkte Bestimmung elektrischer Kenngrößen wie Strom oder Spannung und davon abhängiger Betriebsgrößen elektrischer Bausteine. Beispielsweise kann die rückgespeiste Motorbremsleistung über einen im Rückspeisekreis vorhandenen Umrichter bestimmt werden. Alternativ oder zusätzlich kann die rückgespeiste Motorbremsleistung jedoch auch indirekt bestimmt werden, beispielsweise durch Messung eines Drehmoments, das vom Generator unter Beaufschlagung der rückgespeisten elektrischen Energie erzeugt wird.

Ferner ist die genannte Bremssteuervorrichtung 30 mit Motorsteuermitteln 32 verbunden, mittels derer die Kraftstoffzufuhr an den Verbrennungsmotor 6 reduziert und ggf. völlig abgeschaltet werden kann, um in der ersten Bremsstufe den Verbrennungsmotor 6 im Schubbetrieb mit reduzierter Kraftstoffzufuhr betreiben zu können.

Wird von einem Maschinenführer eine gewisse Bremskraft gewünscht, beispielsweise durch Betätigen eines Bremspedals oder Bremshebels oder Betätigen einer Bremswunschtaste, kann die Bremssteuervorrichtung 30 den Bremsvorgang steuern bzw. regeln, und zwar insbesondere wie folgt: Zunächst wird im Schubbetrieb die von den Elektromotoren 4 bereitgestellte Motorbremsleistung über den Generatorumrichter 16 auf den Generator 5 gegeben, der die rückgespeiste, elektrische Motorbremsleistung in mechanische Antriebsleistung für den Verbrennungsmotor 6 umsetzt und auf den genannten Verbrennungsmotor 6 gibt. Diese Abstützung der elektrischen Motorbremsleistung auf dem Verbrennungsmotor 6 wird dort zum Antreiben aller Hilfsaggregate bzw. -antriebe 7 sowie zum Überwinden der Schleppwiderstände des Verbrennungsmotors 6 genutzt. In einer ersten Bremsstufe regelt dabei die Bremssteuervorrichtung 30 über die Motorsteuermittel 32 die Kraftstoffzufuhr an den Verbrennungsmotor 6 bei im Wesentlichen gleichbleibender Motordrehzahl herunter, um den Betriebszustand des Verbrennungsmotors 6 und der damit verbundenen Hilfsantriebe 7 an sich konstant zu halten, dabei jedoch den Kraftstoffverbrauch zu reduzieren. Diese erste Bremsstufe wird solange realisiert, bis die Kraftstoffzufuhr ggf. auf Null herabgefahren ist.

Wird weitere Bremsleistung benötigt, lässt die Bremssteuervorrichtung 30 ein Hochdrehen des Verbrennungsmotors 6 zu und stützt somit immer noch die Bremsleistung im Wesentlichen vollständig auf dem Verbrennungsmotor 6 ab. Dabei überwacht die Bremssteuervorrichtung 30 über die Drehzahlerfassungsmittel 31 die Drehzahl des Verbrennungsmotors 6 und lässt das Hochdrehen zu, bis der Verbrennungsmotor 6 seine vorzugsweise maximale Drehzahl erreicht. Dabei kann auch die Leistungsaufnahme der Hilfsaggregate 7 erhöht werden, um weitere Bremsleistung bereitzustellen und Effizienzpotentiale zu nutzen.

Wird die maximale Drehzahl erreicht, andererseits aber immer noch zusätzliche Bremsleistung benötigt, schaltet die Bremssteuervorrichtung 30 automatisch die mechanische Bremse 11 zu, um zu verhindern, dass der Verbrennungsmotor 6 überdreht. Die Bremssteuervorrichtung 30 regelt dabei über einen Bremskraftregler 33 die Bremskraft der mechanischen Bremsen 11 derart, dass der Verbrennungsmotor 6 im Wesentlichen auf seiner maximalen Drehzahl gehalten wird, d.h. immer noch der maximal mögliche Anteil an Bremsleistung auf dem Verbrennungsmotor 6 abgestützt wird. Nur der über die Verzögerungskapazität des Verbrennungsmotors 6 und der daran angebundenen Hilfsaggregate 7 hinausgehende Anteil der benötigten Bremsleistung wird über die mechanische Bremse 11 abgefangen.

## Patentansprüche

1. Selbstfahrende Arbeitsmaschine, insbesondere Muldenkipper oder Truck, mit einem Elektroantrieb (3) umfassend zumindest einen Elektromotor (4), einem von einem Verbrennungsmotor (6) antreibbaren Generator (5) zum Versorgen des Elektroantriebs (3) mit elektrischem Strom, sowie einer Bremsvorrichtung (10) zum Abbremsen der Arbeitsmaschine, wobei die genannte Bremsvorrichtung (10) ein generatorisches Bremsen durch den Elektroantrieb (3) vorsieht und eine Rückspeisevorrichtung (20) zum Rückspeisen von elektrischer Motorbremsleistung des Elektromotors (4) an den Generator (5) umfasst, wobei eine Bremssteuervorrichtung (30) zum automatischen Zuschalten zumindest einer mechanischen Bremse (11) in Abhängigkeit der auf den Verbrennungsmotor (6) rückgespeisten, elektrischen Motorbremsleistung und/oder des Betriebszustands des mit rückgespeister Motorbremsleistung beaufschlagten Verbrennungsmotors (6) vorgesehen ist, wobei die Bremssteuervorrichtung (30) derart ausgebildet ist, dass vorrangig ein generatorisches Bremsen und erst nachrangig ein Bremsen durch die mechanische Bremse (11) dann, wenn die auf den Verbrennungsmotor (6) rückgespeiste Motorbremsleistung die Verzögerungskapazität des Verbrennungsmotors (6) und daran angebundener Hilfsaggregate (7) erreicht, erfolgt, **dadurch gekennzeichnet, dass** die Rückspeisevorrichtung (20) einsträngig und frei von elektrischen Bremswiderständen ausgebildet ist, so dass die elektrische Motorbremsleistung des Elektromotors (4) vollständig auf den Generator (5) gegeben wird, wobei die Bremssteuervorrichtung (30) derart ausgebildet ist, dass beim vorrangigen generatorischen Bremsen die Leistungsaufnahme zumindest eines an den Verbrennungsmotor (6) angebundenen Hilfsaggregats (7) erhöht wird, bevor die mechanische Bremse (11) zugeschaltet wird.

2. Selbstfahrende Arbeitsmaschine nach dem vorhergehenden Anspruch, wobei zumindest ein an den Verbrennungsmotor (6) angebundenes Hilfsaggregat (7) eine Kühlvorrichtung und/oder eine Pumpe umfasst, deren Leistungsaufnahme steuerbar ist.

3. Selbstfahrende Arbeitsmaschine nach einem der vorhergehenden Ansprüche, wobei die Bremssteuervorrichtüng (30) eine erste Bremsstufe umfasst, in der die Bremsleistung ausschließlich im Wege elektromotorischen Bremsens und Abstützens der elektrischen Motorbremsleistung auf dem Verbrennungsmotor (6) erfolgt, wobei in einer ersten Unterstufe zunächst die Kraftstoffzufuhr an den Verbrennungsmotor (6) bei im Wesentlichen gleichbleibender Motordrehzahl reduziert wird und in einer zweite Unterstufe bei abgeschalteter Kraftstoffzufuhr eine Drehzahlerhöhung des Verbrennungsmotors (6) zur Erhöhung der Bremsleistung zugelassen wird, bis eine vorbestimmte maximale Drehzahl erreicht wird.

4. Selbstfahrende Arbeitsmaschine nach einem der vorhergehenden Ansprüche, wobei die von dem Generator (5) erzeugte mechanische Antriebsleistung vollständig auf den Verbrennungsmotor (6) gegeben wird.

5. Selbstfahrende Arbeitsmaschine nach einem der vorhergehenden Ansprüche, wobei die Bremssteuervorrichtung (30) mit Drehzahlerfassungsmitteln (31) zum Erfassen einer Drehzahl des Verbrennungsmotors (6) verbindbar ist, wobei die Bremssteuervorrichtung (30) derart ausgebildet ist, dass die mechanische Bremse (11) bei Überschreiten einer vorbestimmten Drehzahl des Verbrennungsmotors zugeschaltet und bei Unterschreiten der/einer vorbestimmten Drehzahl des Verbrennungsmotors (6) die mechanische Bremse (11) gelöst wird.

6. Selbstfahrende Arbeitsmaschine nach einem der vorhergehenden Ansprüche, wobei die Bremssteuervorrichtung (30) einen Bremskraftregler (33) zum Regeln der von der mechanischen Bremse (11) aufgebrachten Bremskraft umfasst, wobei der genannte Bremskraftregler (33) vorzugsweise derart ausgebildet ist, dass in einem Bremsmodus, in dem die mechanische Bremse (11) zugeschaltet ist, die von der mechanischen Bremse (11) aufgebrachte Bremskraft derart geregelt wird, das der Verbrennungsmotor (6) auf seiner maximal zulässigen oder einer vorbestimmten Drehzahl gehalten wird.

7. Selbstfahrende Arbeitsmaschine nach dem vorhergehenden Anspruch, wobei der Bremskraftregler (33) derart ausgebildet ist dass die elektromotorische Bremskraft und/oder die mechanische Bremskraft und/oder die Summe der elektromotorischen und mechanischen Bremskräfte einem Bremskraftwunsch entspricht oder möglichst nahe kommt

8. Selbstfahrende Arbeitsmaschine nach einem der vorhergehenden Ansprüche, wobei die Bremssteuervorrichtung (30) mit Motorsteuermitteln (32) zum Steuern der Kraftstoffzufuhr an den Verbrennungsmotor (6) verbindbar ist, wobei die genannten Motorsteuermittel (32) vorzugsweise derart ausgebildet sind, dass im Bremsbetrieb mit Rückspeisung von Motorbremsleistung auf dem Verbrennungsmotor (6) die Kraftstoffzufuhr derart reduziert wird, dass der Verbrennungsmotor (6) auf im Wesentlichen konstanter Drehzahl gehalten wird.

9. Selbstfahrende Arbeitsmaschine nach einem der vorhergehenden Ansprüche, wobei die Rückspeisevorrichtung (20) zumindest einen dem zumindest einen Elektromotor (4) zugeordneten Motorumrichter (14) und zumindest einen dem Generator (5) zugeordneten Generatorumrichter (16) sowie zumindest einen zwischen dem Motorumrichter (14) und dem Generatorumrichter (16) vorgesehenen Zwischenkreis (15), insbesondere in Form eines Gleichspannungszwischenkreises, umfasst.

10. Verfahren zum Abbremsen einer Arbeitsmaschine (1), insbesondere in Form eines Muldenkippers oder Trucks, die zumindest einen Elektroantrieb (3) umfassend zumindest einen Elektromotor (4), einen von einem Verbrennungsmotor (6) antreibbaren Generator (5) zum Stromversorgen des Elektroantriebs (3) sowie eine Bremsvorrichtung (10) zum Abbremsen der Arbeitsmaschine aufweist, wobei zum Bremsen der Arbeitsmaschine (1) der zumindest eine Elektromotor (4) als Generator betrieben und die dabei erzeugte elektrische Motorbremsleistung über eine Rückspeisevorrichtung (20) auf den Generator (5) rückgespeist, und die vom Generator (5) hierbei erzeugte mechanische Antriebsleistung auf dem Verbrennungsmotor (6) abgestützt wird, wobei eine mechanische Bremse (11) in Abhängigkeit der auf den Verbrennungsmotor (6) rückgespeisten, elektrischen Motorbremsleistung und/oder des Betriebszustands des mit rückgespeister Motorbremsleistung beaufschlagten Verbrennungsmotors (6) von einer Bremssteuervorrichtung (30) automatisch zu- und/oder abgeschaltet wird, wobei vorrangig ein generatorisches Bremsen und erst nachrangig ein Bremsen durch die mechanische Bremse (11) dann vorgesehen wird, wenn die auf den Verbrennungsmotor (6) rückgespeiste Motorbremsleistung die Verzögerungskapazität des Verbrennungsmotors (6) und daran angebundener Hilfsaggregate (7) erreicht, **dadurch gekennzeichnet, dass** die elektrische Motorbremsleistung des Elektromotors (4) über die einsträngig und frei von elektrischen Bremswiderständen ausgebildete Rückspeisevorrichtung (20) vollständig auf den Generator (5) gegeben wird, und beim vorrangigen generatorischen Bremsen die Leistungsaufnahme zumindest eines an den Verbrennungsmotor (6) angebundenen Hilfsaggregats (7) erhöht wird, bevor die mechanische Bremse (11) zugeschaltet wird.

11. Verfahren nach dem vorhergehenden Anspruch, wobei bei geringem Bremskraftwunsch in einer ersten Bremsstufe bei im Wesentlichen gleichbleibender Drehzahl des Verbrennungsmotors (6) die Kraftstoffzufuhr an den Verbrennungsmotor (6) reduziert wird, bei weiter zunehmendem Bremskraftwunsch in einer zweiten Bremsstufe bei abgeschalteter Kraftstoffzufuhr der Verbrennungsmotor (6) unter Beaufschlagung der rückgespeisten Motorbremsleistung bis zum Erreichen einer vorbestimmten maximalen Drehzahl hochgedreht wird, und bei nochmals zunehmendem Bremskraftwunsch die mechanische Bremse (11) in einer dritten Bremsstufe erst dann zugeschaltet wird, wenn der Verbrennungsmotor (6) die vorbestimmte maximale Drehzahl erreicht hat und die somit maximal erreichbare Bremsleistung des Verbrennungsmotors (6) und gegebenenfalls daran angebundener Hilfsaggregate immer noch geringer als der Bremskraftwunsch ist, wobei in der genannten zweiten Bremsstufe die Leistungsaufnahme zumindest eines an den Verbrennungsmotor (6) angebundenen Hilfsaggregats (7) wie Kühllüfter oder Pumpe erhöht wird.

## Claims

1. A self-propelling work machine, in particular a dump truck or truck, having an electric drive (3) comprising at least one electric motor (4), having a generator (5) drivable by an internal combustion engine (6) and for supplying the electric drive (3) with electric current, and having a braking apparatus (10) for braking the work machine, wherein the named braking apparatus (10) provides a regenerative braking by the electric drive (3) and comprises a feedback apparatus (20) for the feedback of electrical motor braking power of the electric motor (4) to the generator (5), wherein a braking control apparatus (30) is provided for the automatic connection of at least one mechanical brake (11) in dependence on the electrical motor braking power fed back to the internal combustion engine (6) and/or on the operating state of the internal combustion engine (6) acted on by fed back motor braking power, wherein the braking control apparatus (30) is configured such that primarily a regenerative braking and only secondarily a braking by the mechanical brake (11) takes place when the motor braking power fed back to the internal combustion engine (6) reaches the deceleration capacity of the internal combustion engine (6) and of auxiliary units (7) connected thereto, **characterized in that** the feedback apparatus (20) is single-stranded and free of electrical braking resistors so that the electrical motor braking power of the electric motor (4) is completely transferred to the generator (5), with the braking control apparatus (30) being configured such that on a primarily regenerative braking the power pick-up of at least one auxiliary unit (7) connected to the internal combustion engine (6) is increased before the mechanical brake (11) is connected.

2. A self-propelling work machine in accordance with the preceding claim, wherein at least one auxiliary unit (7) connected to the internal combustion engine (6) comprises a cooling apparatus and/or a pump whose power pick-up is controllable.

3. A self-propelling work machine in accordance with one of the preceding claims, wherein the braking control apparatus (30) comprises a first braking stage in which the braking power takes place only by way of electric motor braking and of applying the electrical motor braking power on the internal combustion engine (6), wherein, in a first sub-stage, the fuel supply to the internal combustion engine (6) is first reduced with a substantially constant engine speed and, in a second sub-stage with a cut-off fuel supply, a speed increase of the internal combustion engine (6) is permitted for increasing the braking power until a predefined maximum speed is reached.

4. A self-propelling work machine in accordance with one of the preceding claims, wherein the mechanical drive power generated by the generator (5) is completely transferred to the internal combustion engine (6).

5. A self-propelling work machine in accordance with one of the preceding claims, wherein the braking control apparatus (30) is connectable to speed detection means (31) for detecting a speed of the internal combustion engine (6), with the braking control apparatus (30) being configured such that the mechanical brake (11) is connected on an exceeding of a predefined speed of the internal combustion engine and the mechanical brake (11) is released on a falling below of the/of one predefined speed of the internal combustion engine (6).

6. A self-propelling work machine in accordance with one of the preceding claims, wherein the brake control apparatus (30) comprises a braking force regulator (33) for regulating the braking force applied by the mechanical brake (11), with the named braking force regulator (33) preferably being configured such that in a braking mode in which the mechanical brake (11) is connected, the braking force applied by the mechanical brake (11) is regulated such that the internal combustion engine (6) is maintained at its maximum permitted speed or at a predefined speed.

7. A self-propelling work machine in accordance with the preceding claim, wherein the braking force regulator (33) is configured such that the electric motor braking force and/or the mechanical braking force and/or the sum of the electric motor braking force and of the mechanical braking force corresponds or comes as close as possible to a desired braking force.

8. A self-propelling work machine in accordance with one of the preceding claims, wherein the braking control apparatus (30) is connectable to engine control means (32) for controlling the fuel supply to the internal combustion engine (6), with the named engine control means (32) preferably being configured such that in braking operation with feedback of motor braking power on the internal combustion engine (6), the fuel supply is reduced such that the internal combustion engine (6) is maintained at a substantially constant speed.

9. A self-propelling work machine in accordance with one of the preceding claims, wherein the feedback apparatus (20) comprises at least one motor inverter (14) associated with the at least one electric motor (4) and at least one generator inverter (16) associated with the generator (5) as well as at least one intermediate circuit (15) provided between the motor inverter (14) and the generator inverter (16), in particular in the form of a DC voltage intermediate circuit.

10. A method for braking a work machine (1), in particular in the form of a dump truck or truck, which has at least one electric drive (3) comprising at least one electric motor (4), a generator (5) drivable by an internal combustion engine (6) for the power supply of the electric drive (3), and a braking apparatus (10) for braking the work machine, wherein, for the braking of the work machine (1), the at least one electric motor (4) is operated as a generator and the electrical motor braking power generated in so doing is fed back to the generator (5) via a feedback apparatus (20) and the mechanical drive power generated in this respect by the generator (5) is applied on the internal combustion engine (6), wherein a mechanical brake (11) is automatically connected and/or disconnected by a braking control apparatus (30) in dependence on the electrical braking power fed back to the internal combustion engine (6) and/or on the operating state of the internal combustion engine (6) acted on by fed back motor braking power, wherein primarily a regenerative braking and only secondarily a braking by the mechanical brake (11) is provided when the motor braking power fed back to the internal combustion engine (6) reaches the deceleration capacity of the internal combustion engine (6) and of auxiliary units (7) connected thereto, **characterized in that** the electrical motor braking power of the electric motor (4) is completely transferred to the generator (5) via the feedback apparatus (20) which is single-stranded and free of electrical braking resistors, and on a primarily regenerative braking the power pick-up of at least one auxiliary unit (7) connected to the internal combustion engine (6) is increased before the mechanical brake (11) is connected.

11. A method in accordance with the preceding claim, wherein with a small desired braking force in a first braking stage at a substantially unchanging speed of the internal combustion engine (6), the fuel supply to the internal combustion engine (6) is reduced, with a further increasing desired braking force in a second braking stage with a cut-off fuel supply, the internal combustion engine (6) is revved up while being acted on by the fed back motor braking power up to the reaching of a predefined maximum speed, and with an again increasing desired braking force the mechanical brake (11) is only connected in a third braking stage when the internal combustion engine (6) has reached the predefined maximum speed and the thus maximally achievable braking power of the internal combustion engine (6) and of auxiliary units optionally connected thereto is always still smaller than the desired braking force, wherein in the named second braking stage the power pick-up of at least one auxiliary unit (7) such as a cooling fan or pump connected to the internal combustion engine (6) is increased.

## Revendications

1. Engin de travail automoteur, en particulier tombereau ou camion, doté d'un entraînement électrique (3) comprenant au moins un moteur électrique (4), d'un générateur (5) pouvant être entraîné par un moteur à combustion interne (6) pour alimenter l'entraînement électrique (3) en courant électrique, ainsi que d'un dispositif de freinage (10) pour le freinage de l'engin de travail, ledit dispositif de freinage (10) prévoyant un freinage électrique par l'entraînement électrique (3) et comprenant un dispositif de réinjection (20) pour réinjecter de la puissance électrique de freinage moteur du moteur électrique (4) au générateur, un dispositif de commande de frein (30) étant prévu pour mettre automatiquement en service au moins un frein mécanique (11) en fonction de la puissance électrique de freinage moteur réinjectée dans le moteur à combustion interne (6) et/ou de l'état de fonctionnement du moteur à combustion interne (6) alimenté en puissance de freinage moteur réinjectée, le dispositif de commande de frein (30) étant conçu de telle manière qu'un freinage électrique est effectué en priorité et un freinage par le frein mécanique (11) est effectué uniquement de manière secondaire quand la puissance de freinage moteur réinjectée dans le moteur à combustion interne (6) atteint la capacité de décélération du moteur à combustion interne (6) et de groupes auxiliaires (7) reliés à celui-ci, **caractérisé en ce que** le dispositif de réinjection (20) est réalisé monophasé et dénué de résistances de freinage électriques, de sorte que la puissance électrique de freinage moteur du moteur électrique (4) est transmise en totalité au générateur (5), le dispositif de commande de frein (30) étant conçu de telle manière que, lors du freinage électrique prioritaire, la puissance absorbée d'au moins un groupe auxiliaire (7) relié au moteur à combustion interne (6) est augmentée, avant que le frein mécanique (11) ne soit mis en service.

2. Engin de travail automoteur selon la revendication précédente, dans lequel au moins un groupe auxiliaire (7) relié au moteur à combustion interne (6) comprend un dispositif de refroidissement et/ou une pompe, dont la puissance absorbée peut être commandée.

3. Engin de travail automoteur selon l'une des revendications précédentes, dans lequel le dispositif de commande de frein (30) comprend un premier palier de freinage, dans lequel la puissance de freinage est effectuée uniquement par voie de freinage électromoteur et de support de la puissance électrique de freinage moteur par le moteur à combustion interne (6), l'alimentation en carburant du moteur à combustion interne (6) étant d'abord, dans un premier sous-palier, réduite avec une vitesse du moteur sensiblement constante et, dans un second sous-palier, une augmentation de la vitesse du moteur à combustion interne (6) étant autorisée pour augmenter la puissance de freinage avec l'alimentation en carburant désactivée, jusqu'à ce qu'une vitesse maximale prédéfinie soit atteinte.

4. Engin de travail automoteur selon l'une des revendications précédentes, dans lequel la puissance d'entraînement mécanique générée par le générateur (5) est transmise en totalité au moteur à combustion interne (6).

5. Engin de travail automoteur selon l'une des revendications précédentes, dans lequel le dispositif de commande de frein (30) peut être relié à des moyens de détection de vitesse (31) pour détecter une vitesse du moteur à combustion interne (6), le dispositif de commande de frein (30) étant conçu de telle manière que le frein mécanique (11) est mis en service lorsqu'une vitesse prédéfinie du moteur à combustion interne est dépassée et le frein mécanique (11) est desserré lorsque la/une vitesse prédéfinie du moteur à combustion interne (6) n'est pas atteinte.

6. Engin de travail automoteur selon l'une des revendications précédentes, dans lequel le dispositif de commande de frein (30) comprend un régulateur de force de freinage (33) pour réguler la force de freinage appliquée par le frein mécanique (11), ledit régulateur de force de freinage (33) étant de préférence conçu de telle manière que, dans un mode de freinage, dans lequel le frein mécanique (11) est mis en service, la force de freinage appliquée par le frein mécanique (11) est régulée de telle manière que le moteur à combustion interne (6) est maintenu à sa vitesse maximale admissible ou une vitesse prédéfinie.

7. Engin de travail automoteur selon la revendication précédente, dans lequel le régulateur de force de freinage (33) est conçu de telle manière que la force de freinage électromotrice et/ou la force de freinage mécanique et/ou la somme des forces de freinage électromotrice et mécanique correspond à ou s'approche le plus possible d'une force de freinage souhaitée.

8. Engin de travail automoteur selon l'une des revendications précédentes, dans lequel le dispositif de commande de frein (30) peut être relié à des moyens de commande moteur (32) pour commander l'alimentation en carburant du moteur à combustion interne (6), lesdits moyens de commande moteur (32) étant de préférence conçus de telle manière que, en mode de freinage avec réinjection de puissance de freinage moteur dans le moteur à combustion interne (6), l'alimentation en carburant est réduite de telle manière que le moteur à combustion interne (6) est maintenu à une vitesse sensiblement constante.

9. Engin de travail automoteur selon l'une des revendications précédentes, dans lequel le dispositif de réinjection (20) comprend au moins un convertisseur de moteur (14) associé à l'au moins un moteur électrique (4) et au moins un convertisseur de générateur (16) associé au générateur (5), ainsi qu'au moins un circuit intermédiaire (15) prévu entre le convertisseur de moteur (14) et le convertisseur de générateur (16), en particulier sous la forme d'un circuit intermédiaire de tension continue.

10. Procédé de freinage d'un engin de travail (1), en particulier sous la forme d'un tombereau ou d'un camion, qui comporte au moins un entraînement électrique (3) comprenant au moins un moteur électrique (4), un générateur (5) pouvant être entraîné par un moteur à combustion interne (6) pour alimenter en courant l'entraînement électrique (3) ainsi qu'un dispositif de freinage (10) pour le freinage de l'engin de travail, l'au moins un moteur électrique (4) étant exploité comme générateur pour le freinage de l'engin de travail (1) et réinjectant la puissance électrique de freinage moteur ainsi générée dans le générateur (5) par le biais d'un dispositif de réinjection (20), et la puissance d'entraînement mécanique ainsi générée par le générateur (5) étant supportée par le moteur à combustion interne (6), un frein mécanique (11) étant automatiquement mis en service et/ou désactivé par un dispositif de commande de frein (30) en fonction de la puissance électrique de freinage moteur réinjectée dans le moteur à combustion interne (6) et/ou de l'état de fonctionnement du moteur à combustion interne (6) alimenté par la puissance de freinage moteur réinjectée, un freinage électrique étant prévu en priorité et un freinage par le frein mécanique (11) uniquement de manière secondaire quand la puissance de freinage moteur réinjectée dans le moteur à combustion interne (6) atteint la capacité de décélération du moteur à combustion interne (6) et de groupes auxiliaires (7) reliés à celui-ci, **caractérisé en ce que** la puissance électrique de freinage moteur du moteur électrique (4) est transmise en totalité au générateur (5) par le biais du dispositif de réinjection (20) réalisé monophasé et dénué de résistances de freinage électriques, et lors du freinage électrique prioritaire, la puissance absorbée d'au moins un groupe auxiliaire (7) relié au moteur à combustion interne (6) est augmentée, avant que le frein mécanique (11) ne soit mis en service.

11. Procédé selon la revendication précédente, dans lequel, si la force de freinage souhaitée est relativement faible, l'alimentation en carburant du moteur à combustion interne (6) est réduite dans un premier palier de freinage avec une vitesse sensiblement constante du moteur à combustion interne (6), si la force de freinage souhaitée augmente, le moteur à combustion interne (6) est accéléré dans un second palier de freinage, avec l'alimentation en carburant désactivée, en alimentant la puissance de freinage moteur réinjectée jusqu'à ce qu'une vitesse maximale prédéfinie soit atteinte, et si la force de freinage souhaitée augmente encore, le frein mécanique (11) est mis en service dans un troisième palier de freinage uniquement quand le moteur à combustion interne (6) a atteint la vitesse maximale prédéfinie et que la puissance de freinage maximale ainsi atteignable du moteur à combustion interne (6) et le cas échéant de groupes auxiliaires reliés à celui-ci est toujours inférieure à la force de freinage souhaitée, la puissance absorbée d'au moins un groupe auxiliaire (7) relié au moteur à combustion interne (6) tel qu'un ventilateur de refroidissement ou une pompe étant augmentée dans ledit second palier de freinage.
